# EUROPÄISCHE PATENTSCHRIFT

(11) **EP 0 640 310 B1**
(45) Veröffentlichungstag und Bekanntmachung des Hinweises auf die Patenterteilung: **04.11.1998**
(21) Anmeldenummer: 94107706.7
(22) Anmeldetag: 18.05.1994
(51) Int. Cl.: A47J 27/16, F24C 15/32

(54) **Konvektions- und Dampfofen für Lebensmittel**
Steam convection oven for food preparation
Four à convection et vapeur pour aliments

(30) Priorität: 05.08.1993 DE 9311711 U; 05.11.1993 DE 9316958 U; 17.02.1994 DE 9402624 U
(43) Veröffentlichungstag der Anmeldung: 01.03.1995
(73) Patentinhaber: ANGELO PO GRANDI CUCINE S.p.A., 41012 Carpi (MO) (IT)
(72) Erfinder: Culzoni, Marco, I-Correggio (Reggio E.) (IT); Vezzani, William, I-Campagnola (Reggio E.) (IT)
(74) Vertreter: Laufhütte, Dieter, Dr.-Ing.

(56) Entgegenhaltungen:
- EP-A- 0 457 971
- EP-A- 0 523 489
- EP-A- 0 530 477
- DE-A- 4 131 748
- US-A- 4 671 250

## Beschreibung

Die Erfindung betrifft einen Konvektions- und Dampfofen für Lebensmittel nach dem Oberbegriff des unabhängigen Anspruchs 1.

Ein derartiger Ofen ist aus EP-A-523 489 bekannt

Ein weiterer Konvektions- und Dampfofen für Lebensmittel ist beispielsweise schon aus der EP 244 538 B 1 bekannt. Für den Fall, daß dieser vorbekannte Ofen als Dampfofen betrieben werden soll, wird eine Dampfatmosphäre dadurch gebildet, daß das aus der Rohrleitung herausströmende Wasser in zwei Schritten zerstäubt wird und in dieser zerstäubten Form von der durch den Ventilator erzeugten radialen Luftströmung an den Heizelementen vorbeigeführt wird, wo es in die Dampfphase überführt wird. Die Dampfpartikel werden dann mit der durch den Ventilator erzeugten Strömung weiter mitgerissen. Die Endzerstäubung der noch nicht in Dampfform überführten Wasserpartikel erfolgt durch den radial wirkenden Ventilator. Die Vorzerstäubung wird gemäß diesem vorbekannten Stand der Technik dadurch erzeugt, daß auf der Drehachse des Ventilators ein mit dem Ventilator rotierendes geschlossenes Becherelement gebildet ist. In dieses Becherelement ist das Ende der Wasserzuführleitung geführt. Das rotierende Becherelement weist einen Randteil und eine Innenfläche auf, die vom Randteil weg umgekehrt konisch verläuft, so daß sich in dem Becher ein Wasservolumen sammeln kann und so daß nach Auffüllen des Wasservolumens das überschüssige Wasser über den Rand fließt und dadurch einen Wasserfilm bildet, der durch die Fliehkraft zerstäubt wird. Das so vorzerstäubte Wasser trifft dann auf die in einem Ring angeordneten Blätter des radial wirkenden Ventilators auf und wird dort noch weiter zerkleinert, wie zuvor erläutert.

Auch aus der italienischen Gebrauchsmusteranmeldung 40 052A/90 ist ein gattungsgemäßer Konvektions- und Dampfofen bekannt. Im Gegensatz zu dem zuvor beschriebenen Konvektions- und Dampfofen ist hier im Ofenraum ein Überdruck aufgebaut, so daß der im Nebenraum gebildete und sich über den Ofenraum verteilende Dampf überhitzt werden kann. Darüber hinaus führt die Druckerhöhung im Ofenraum um ca. 5 mbar zu einer gleichmäßigeren Verteilung der Dampfatmosphäre. Das Vorzerstäubungselement ist hier durch eine auf der Achse des Ventilators mitrotierenden Trommel gebildet, die auf Umfang gleichmäßig verteilt eine Vielzahl von langlochartigen Durchbrüchen aufweist. Das Wasser wird von der Rohrleitung am offenen Ende der mit den Durchbrüchen versehenen Trommel aufgegeben. Durch die vom radial wirkenden Ventilator aus dem Zentrum angesaugte Luftströmung wird das aus dem Rohr austretende Wasser mitgerissen und durch die langlochartigen Öffnungen in der Trommelwandung geführt, wobei das Wasser an den langlochartigen Öffnungen zerstäubt wird. Im Unterschied zu dem vorbekannten Vorzerstäubungselement gemäß der EP 244 538 B1 wird hier nicht nur ein über die Kante eines Bechers abreißender Wasserfilm gebildet. Vielmehr wird hier über die gesamte Länge der Langlöcher ein Zerstäubungseffekt erreicht, so daß die so vorzerstäubten Wassertropfen gleichverteilt auf die Ventilatorblätter auftreffen. Hier wird also eine bessere Zerstäubung erreicht, da aufgrund eines anderen Wirkprinzips der Vorzerstäubung die ganze Tiefe des radial wirkenden kreisförmigen Ventilators ausgenutzt wird.

Allerdings weisen beide zuvor beschriebenen Ausführungsformen den Nachteil auf, daß sie nach verhältnismäßig kurzer Standzeit bereits verkalken und dann ausgewechselt werden müssen. Der Kalk setzt sich bevorzugt im Auslaufbereich des Rohres, also am offenen Ende des geschlossenen Bechers bzw. der mit Durchbrüchen versehenen Trommel an. Auch eine sich gegenüber der italienischen Gebrauchsmusteranmeldung unterscheidende realisierte Ausführungsform, in der die Trommel eine sich nach außen hin erweiternde konische Form aufweist, führt hier zu keiner Abhilfe. Die sich aufbauende Kalkschicht ist je nach Kalkgehalt des eingesetzten Wassers innerhalb kurzer Zeit so dick, daß die gesamte Vorrichtung nicht mehr funktionsfähig ist.

Aus der EP 233 535 B ist ebenfalls ein gattungsgemäßer Konvektions- und Dampfofen bekannt. Bei dieser Ausführung ist kein eigens gestaltetes Vorzerstäubungselement vorgesehen. Vielmehr wird hier das Wasser auf die Nabe des Ventilators aufgegeben. Dabei wird nach der Lehre dieses Patents die Austrittsöffnung der Wasserzuführung radial von außen auf die Nabe hin gerichtet und die Austrittsöffnung der Wasserzuführung ist oberhalb der Nabe angeordnet. Hierdurch erhofft man sich, daß das aus der Austrittsöffnung ausströmende Wasser von oben auf die mit dem Ventilator rotierende Nabe fallen kann und von dieser zerstäubt wird. Dieser vorbekannte Konvektions- und Dampfofen führt zu einer nicht befriedigenden Vorzerstäubungswirkung.

Ausgehend von dem zuletzt genannten Stand der Technik ist es die Aufgabe der vorliegenden Erfindung, den gattungsgemäßen Konvektions- und Dampfofen derart weiterzubilden, daß eine bessere Vorzerstäubung des zu verdampfenden Wassers ermöglicht wird.

Die erfindungsgemäße Lösung dieser Aufgabe ergibt sich ausgehend von dem gattungsgemäßen Konvektions- und Dampfofen aus dem kennzeichnenden Teil des Anspruchs 1. Demnach wird auf der Nabe des Ventilators ein eigens für die Vorzerstäubung geformtes Vorzerstäubungselement angeordnet. Dieses besteht aus einem Körper mit konvexer Oberfläche. Es wurde überraschend gefunden, daß das auf einen konvexen Körper auftropfende Wasser aufgrund der Rotationsbewegung dieses Körpers schon sehr fein vorzerstäubt wird. Entscheidend ist es hier, daß die sich auf dem Vorzerstäubungselement bildenden Kalkschichten nicht zu einem Verstopfen und zu einer Funktionsuntüchtigkeit führen, sondern sich auf der konvexen Oberfläche aufbauen und zu zusätzlichen Unregelmäßigkeiten auf der konvexen Oberfläche führen, die die Vorzerstäubungswirkung eher noch verbessern.

Gemäß einer bevorzugten Ausführungsform der Erfindung ist der konvexe Körper als Kugel ausgebildet. Auf der Oberfläche der Kugel kann ein die Kugel umhüllender Steg angeordnet sein, der die Rotationsachse der Kugel in einem Winkel (α) schneidet, der größer als 0° und kleiner als 90° ist. Durch diesen zusätzlichen Steg wird eine besonders gute Vorzerstäubung erreicht. Insbesondere die Verteilung der Wassertröpfchen über die gesamte Tiefe des Ventilatorrings ist hierdurch sichergestellt. In einer tieferen Bauform des radial wirkenden Ventilators für vergleichsweise größere Öfen kann die Kugel über ein Zylinderansatzstück auf der Antriebswelle des Ventilators befestigt sein.

Die Austrittsöffnung der das zu verdampfende Wasser zuführenden Rohrleitung kann dabei in Richtung der Rotationsachse betrachtet neben der Kugel angeordnet sein und axial auf die Kugel hin gerichtet sein. Damit werden die aus der Austrittsöffnung herausströmenden Wassertropfen von der axial in das Lüfterrad hineinströmenden Luftströmung erfaßt und auf das entsprechend geformte Vorzerstäubungselement hin geleitet.

Besonders vorteilhaft kann die Kugel aus zwei Halbkugelschalen zusammengesetzt sein, wobei beide Halbkugelschalen von einem umlaufenden Rand begrenzt werden. Die beiden Halbkugelschalen können entlang der aufeinanderliegenden Ränder miteinander stoffschlüssig und/oder formschlüssig verbunden werden. Hier wird in sehr einfacher Art und Weise eine Kugel an die Hand gegeben, die den zuvor genannten umhüllenden Steg aufweist.

Für eine weniger tief bauende Ausführung können die Halbkugelschalen in vorteilhafter Art und Weise zwei Durchbrüche aufweisen, wobei der eine Durchbruch an einen Wellenansatz der Ventilatorrotationswelle angepaßt ist und wobei durch den anderen Durchbruch eine Montageschraube zur Montage der Kugel geführt ist. Bei dieser Bauausführung wird auf das Zylinderansatzstück das zuvor erwähnt wurde, verzichtet.

In einer weiteren Ausgestaltung der Erfindung kann die Oberfläche der Kugel teilweise abgeflacht sein.

Das Vorzerstäubungselement kann gemäß einer alternativen Ausführungsform der Erfindung auch aus einer Halbkugel bestehen. Dabei kann die Symmetrielinie der Halbkugel einerseits mit der Rotationsachse zusammenfallen. Die Symmetrielinie der Halbkugel kann aber auch unter einem Winkel (β) zu der Rotationsachse angestellt sein.

In vorteilhafter Weise läßt sich die Halbkugel aus einer Halbkugelschale mit umlaufenden Rand und einer mit diesem umlaufenden Rand bündig abschließenden und stoffschlüssig mit diesem verbundenen kreisrunden Platte herstellen.

Gemäß einer bevorzugten Ausführungsform kann an der zur Rotationsachse des Ventilators gerichteten Seite der Austrittsöffnung der Rohrleitung ein Stab, eine Zunge oder ein weiteres Rohr angesetzt sein. Der Stab, die Zunge oder das weitere Rohr dienen zur weiteren Führung der Tropfen, da die aus der Rohrleitung austretenden Tropfen entlang des Stabes, der Zunge oder des zusätzlichen Rohres abperlen und vom Stab, der Zunge oder dem zusätzlichen Rohr zu dem Vorzerstäubungselement hin geführt werden. Vorteilhaft reicht das freie Ende des Stabes, der Zunge oder des weiteren Rohres ungefähr bis zur Rotationsachse des Ventilators. Gemäß einer vorteilhaften Ausführungsform kann der Stab, die Zunge oder das weitere Rohr elastisch sein und gegebenenfalls aus Gummi bestehen. Unter Zunge ist auch eine Rinne zu verstehen, die gegebenenfalls elastisch ausgebildet sein kann und/oder schwingend am Rohr aufgehängt sein kann. Eine alternative Ausführungsform besteht darin, daß der Stab aus Metall besteht.

Diese besondere Ausgestaltung der Erfindung ermöglicht einen weiteren zusätzlichen Zerstäubungsmechanismus. So werden die Tropfen, die über den Stab, die Zunge oder das Rohr geleitet werden und mit dem rotierenden Element in Berührung kommen bereits primär vorzerstäubt. Die Rotation des Vorzerstäubungselements führt zu einer weiteren Zerstäubung.

Das eine Ende der Kugel kann abgeflacht sein, wobei die Abflachung der Austrittsöffnung der Rohrleitung gegenüberliegt. Somit kann die Ebene der Austrittsöffnung parallel zu der Ebene der Abflachung ausgebildet sein. Die Rohraustrittsöffnung kann aber auch angeschrägt sein.

Gemäß einer weiteren Ausführungsform der Erfindung kann die Kugel in der Rotationsachse eine ins Kugelinnere gerichtete Ausnehmung aufweisen, wobei der Stab in diese Ausnehmung hineinreicht. Hierdurch wird das Überführen der auf das Vorzerstäubungselement hinzuleitenden Wassertropfen weiter verbessert.

Eine besondere Ausführungsform der Erfindung besteht darin, daß die Rohrleitung bis in die Höhe der Rotationsachse des Ventilators heruntergezogen ist und erst ungefähr in der Höhe der Rotationsachse des Ventilators ein zum Vorzerstäubungselement offener Becher angesetzt ist. Dabei können sich die Symmetrieachsen des Vorzerstäubungselements und des Bechers ungefähr unter einem rechten Winkel schneiden. Die Rohrleitung und der angesetzte Becher sind derart ausgeführt, daß das Wasser über die Rohrleitung in den mit dieser verbundenen Becher läuft, der dieses in unmittelbarer Nähe des Vorzerstäubungselementes leitet.

Der Becher kann vorzugsweise aus Gummi oder Kunststoff, wie beispielsweise Teflon, PTFE, bestehen. Der offene Rand des Bechers kann angeschrägt sein und ein Teil des Randes kann unmittelbar neben dem Vorzerstäubungselement angeordnet sein.

Anstelle des Bechers kann aber auch ein an beiden Enden offenes Rohr in der Rohrleitung angesetzt sein. Dabei kann dieses eine trichterförmig verlaufende Innenwandung aufweisen, wobei sich der Innendurchmesser zum Vorzerstäubungselement hin erweitert. Hierdurch wird gewährleistet, daß das aus der Rohrleitung in das offene Rohr eintretende Wasser zum Vorzerstäubungselement hin fließt. Die Ausführung als offenes Rohr hat gegenüber dem einseitig geschlossenen Becher den Vorteil, daß durch den Ventilator angesaugte Luft durch das Rohr in Richtung zum Vorzerstäubungselement hin strömt.

Falls die Austrittsöffnung der Rohrleitung in Rotationsrichtung neben der Kugel angeordnet ist und axial auf die Kugel hingerichtet ist, wobei die Austrittsöffnung der Rohrleitung oberhalb des Vorzerstäubungselements liegt, kann unterhalb der Austrittsöffnung im Bereich der Symmetrieachse des Vorzerstäubungselementes eine Auffangwanne angeordnet sein, deren unterer Rand nahe dem Vorzerstäubungselement endet. Dabei wird diese Auffangwanne vorteilhaft über ein elastisches Halteelement an die Rohrleitung angeschraubt.

Weitere Einzelheiten und Vorteile der Erfindung werden anhand mehrerer in der Zeichnung dargestellter Ausführungsbeispiele erläutert. Es zeigen:
- Fig. 1:: eine schematische Schnittdarstellung eines erfindungsgemäßen Konvektions- und Dampfofens für Lebensmittel in einer Ausführungsform und
- Fig. 2-14:: vereinfachte Detaildarstellungen im Schnitt des Dampferzeugungssystems gemäß unterschiedlicher Ausführungsvarianten des erfindungsgemäßen Konvenktions- und Dampfofens für Lebensmittel.

Der Konvektions- und Dampfofen 10 umfaßt einen Ofenraum 12, in dem in bekannter Art und Weise auf Gleitschienen 14 Bleche 16 oder Roste verschiebbar geführt sind. Über eine Trennwand 18 ist ein Nebenraum 20 vom Ofenraum abgeteilt. Dieser Nebenraum 20 steht über umlaufende Schlitze 22 und einen zentralen Durchbruch 24 mit dem Ofenraum in Verbindung. Im Nebenraum 20 ist ein radial wirkender Ventilator 26 angeordnet, der auf einem Kreisumfang angeordnete Ventilatorblätter 28 aufweist. Der Ventilator 26 ist auf eine Nabe 30 geflanscht, die über einen Motor 32 angetrieben wird. Ebenfalls auf der Ventilatornabe ist ein Vorzerstäubungselement 34 angeordnet, über dem eine Rohrleitung 36, in der zu verdampfendes Wasser eingeführt wird, endet. Um den Ventilator 26 herum sind Heizschlangen 38 gelegt, die beispielsweise gasbeheizt oder elektrisch beheizt sind. Der Ofen 10 kann als Konvektionsofen betrieben werden, indem mittels des radial wirkenden Ventilators 26 Luft über die Heizsschlangen 38 geführt wird, wo sie erhitzt wird. Die erhitzte Luft tritt durch den um die Wandung 18 umlaufenden Spalt 22 in den Ofenraum 12 ein. Im Bereich des Durchbruchs 24 wird die Luft vom Ventilator 26 aus dem Ofenraum angesaugt und in Richtung der Ventilatorblätter 28 umgelenkt.

Bei der Betriebsweise als Dampfofen wird zusätzlich Wasser aus der Rohrleitung 36 auf das rotierende Vorzerstäubungselement 34 geleitet, wo es in feine Tröpfchen dispergiert wird, die sich über die Tiefe des Ventilators 26 verteilen. Diese vorzerstäubten Tröpfchen werden von der zu den Ventilatorblättern 28 umgelenkten Luftströmungen mitgerissen und prallen gegen die Ventilatorblätter 28, wo sie zum zweitenmal dispergiert und damit fein zerstäubt werden. Die so fein zerstäubten Wasserpartikel werden an den Heizelementen 38 vorbeigeführt und treten dort in die Dampfphase über. Der Dampf wird mittels des Luftstroms über den Ofenraum 12 gleich verteilt. Besonders vorteilhaft für die Dampfverteilung ist es in der hier gezeigten Ausführungsform, daß der Ofenraum 12 unter einem Überdruck von 3 bis 8 mbar gehalten ist.

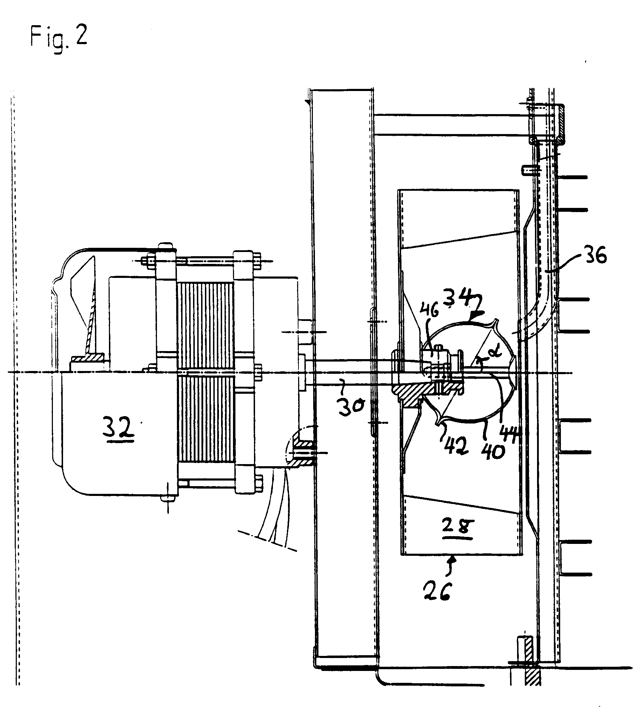

Aus den Figuren 2 bis 8 ergeben sich unterschiedliche Ausführungsformen für das Vorzerstäubungselement. In den Figuren 2 bis 8 sind jeweils nur die für die Zerstäubung wesentlichen Details dargestellt. Aus Vereinfachungsgründen sind beispielsweise die Heizelemente 38 hier nicht mehr dargestellt worden.

In Figur 2 ist auf der durch den Motor 32 angetriebenen Ventilatorwelle 30 ein Vorzerstäubungselement 34 montiert, das aus zwei Halbkugelschalen 40 zusammengesetzt ist, wobei beide Halbkugelschalen von einem umlaufenden Rand 42 begrenzt werden. Die beiden Halbkugelschalen sind entlang der aufeinanderliegenden Ränder 42 miteinander stoffschlüssig verbunden. Entlang dieser stoffschlüssig miteinander verbundenen Ränder ist ein die Oberfläche der Kugel umhüllender Steg gebildet, der, wie der Figur 2 zu entnehmen ist, die Rotationsachse der Kugel in einem Winkel schneidet, der in diesem Ausführungsbeispiel ca. 60° beträgt. Die Halbkugelschalen weisen zwei Durchbrüche auf, wobei der eine Durchbruch an den Wellenansatz der Ventilatorroationswelle 30 angepaßt ist. Im hier in Figur 2 dargestellten Ausführungsbeispiel sitzt auf dem Wellenansatz ein Befestigungsflansch 46 für den Ventilator 26, an den dann der Durchbruch der Halbkugelschale 40 angepaßt ist. Durch die andere Halbkugelschale 40 ist eine Schraube 44 geführt, die in eine entsprechende Bohrung innerhalb des Montageflansches 46 eindrehbar ist und so die aus den beiden Halbkugelschalen zusammengesetzte Kugel fixiert. Oberhalb der Rotationsachse mündet die Rohrleitung 36, durch die das Wasser auf das Vorzerstäubungselement 34 aufgegeben wird. Dabei ist das Rohr parallel zum Ventilator angeordnet und in seinem Endbereich zu dem Vorzerstäubungselement 34 hin gebogen. Das Rohr 36 endet ungefähr im Bereich der Außenkante des Ventilators 26, wie in Figur 2 näher dargestellt. In dem in Figur 2 dargestellten Ausführungsbeispiel erstreckt sich das Zerstäubungselement 34 beinahe über die ganze Tiefe des Ventilators 26. Dies entspricht einer Ausführungsform, die insbesondere für kleinere Öfen 10 gedacht ist. Hier läuft der Ventilator 26 und damit auch das Vorzerstäubungselement 34 mit Drehzahlen um ca. 2800 Umdrehungen pro Minute. Die Gesamtabmessung der kleinen Öfen ist ca. 50 cm Tiefe, 50 cm Höhe und 70 cm Breite. Hier sind entsprechend die Außenmaße angegeben.

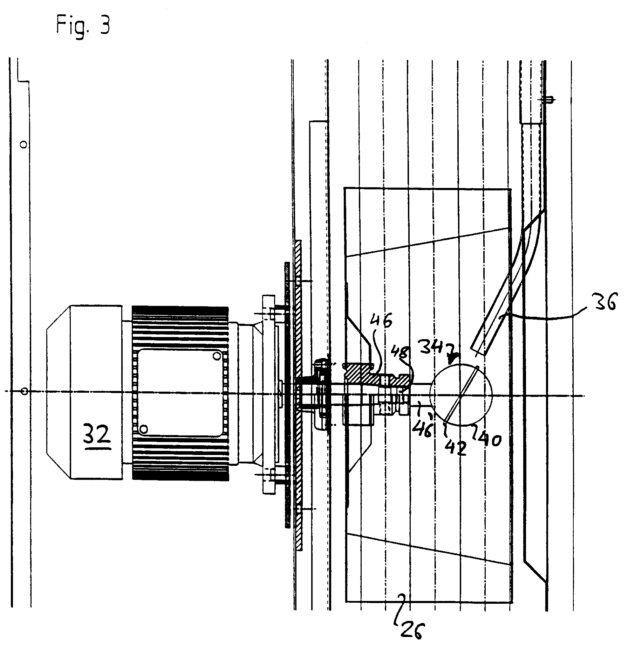

Die Ausführungsform gemäß Figur 3 entspricht im wesentlichen derjenigen gemäß Figur 2. Allerdings handelt es sich hier um eine Ausführungsform insbesondere für vergleichsweise größere Öfen. Das Vorzerstäubungselement 34 besteht hier wiederum aus einer Kugel mit umhüllenden Steg, der ebenfalls wieder aus Halbkugelschalen 40 und entlang des überstehenden Rands 42 zusammengefügtem Kugelkörper besteht. Hier ist allerdings ein in der Rotationsachse ausgerichtetes Zylinderansatzstück 46' vorgesehen, über dessen einer Seite ein Schraubbolzen 48 angesetzt ist, an den das Vorzerstäubungselement 34 in den Ventilatorflansch 36 eingeschraubt ist. Das Rohr 36 zur Zuführung des Wassers endet hier innerhalb des Ventilators 26 oberhalb des Kugelkörpers wie in Figur 3 dargestellt. Bei dieser Bauausführung läuft der Ventilator 26 mit Umdrehungen von 700 Umdrehungen pro Minute bis 1400 Umdrehungen pro Minute um.

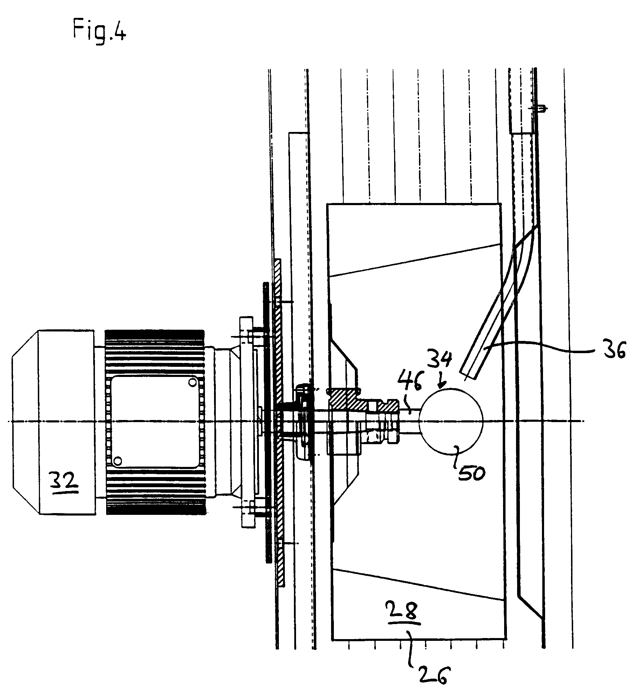

Die in Figur 4 dargestellte alternative Ausführungsform entspricht im wesentlichen derjenigen gemäß Figur 3 und ist auch für vergleichsweise größer bauende Öfen vorgesehen. Die Drehzahl entspricht derjenigen gemäß der Ausführungsform nach Figur 3. Hier ist allerdings als Vorzerstäubungselement 34 eine einfache Kugel 50 vorgesehen, die keinen umhüllenden Steg aufweist. Ansonsten entspricht diese Ausführungsvariante derjenigen, die bereits unter Bezugnahme auf Figur 3 beschrieben wurde.

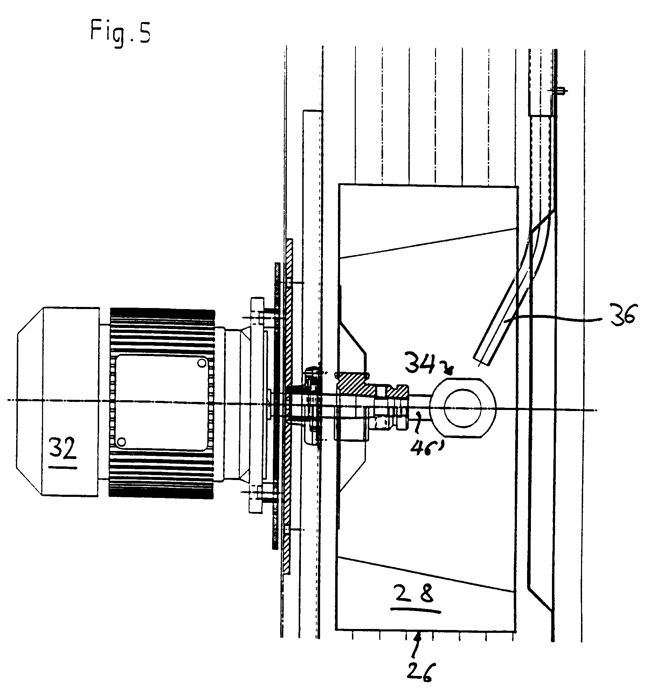

Die Ausführungsvariante gemäß der Figur 5 entspricht denjenigen gemäß der Figur 3 und 4 und wird auch bevorzugt für die große Bauvariante des Ofens eingesetzt. Hier ist allerdings eine Kugel mit abgeflachten Oberflächen als Vorzerstäubungselement 34 eingesetzt.

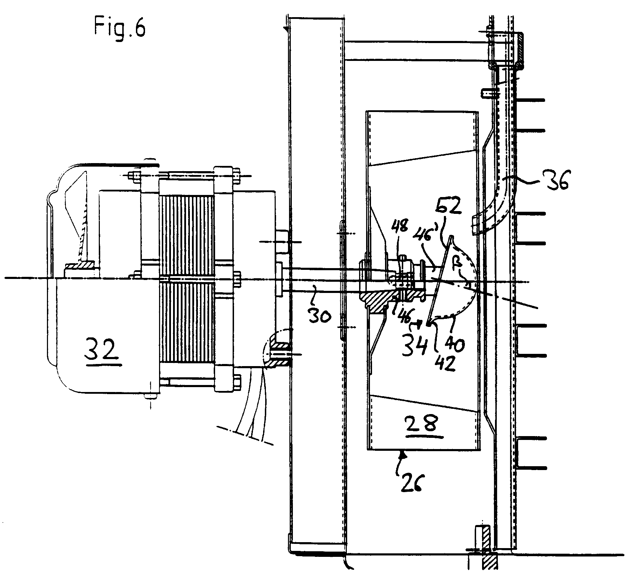

In der in Figur 6 dargestellten Ausführungsform weist das Vorzerstäubungselement 34 die Form einer Halbkugel auf. Diese ist aus einer Halbkugelschale 40 mit umlaufenden Rand 42 gebildet, mit der bündig abschließend eine kreisrunde Platte 52 verbunden ist. An dieser Platte 52 sitzt ein Zylinderansatzstück 46' an, das über einen an diesem angeformten Bolzen 48 in den Ventilatorflansch 46 eingeschraubt ist. Wie in der Figur 6 dargestellt, ist die Halbkugel gegenüber der Rotationsachse gekippt. Die Symmetrielinie der Halbkugel bildet dabei mit der Rotationsachse einen Winkel β von 15°. Das Wasserrohr 36 mündet oberhalb des Vorzerstäubungselements 34, wie in Figur 6 gezeigt.

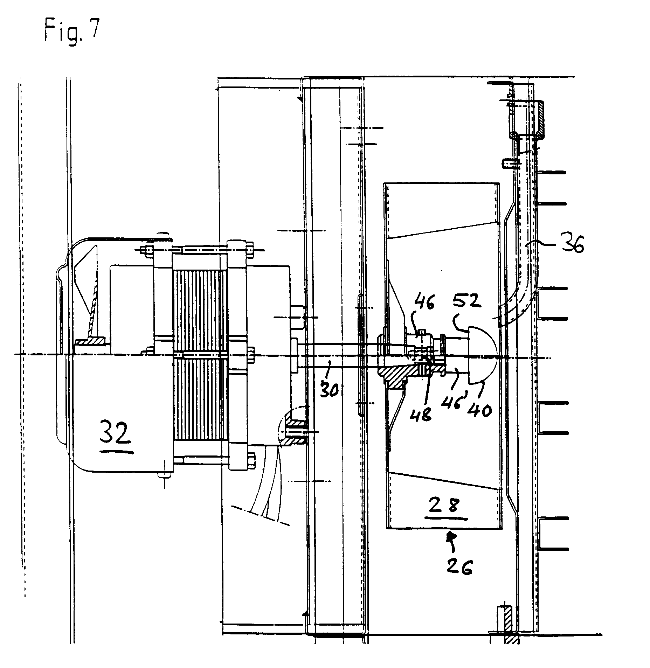

Die Ausführungsform gemäß der Figur 7 entspricht weitgehend der zuvor anhand der Figur 6 erläuterten Ausführungsform. Hier ist allerdings an der Halbkugelschale 40 kein Rand angeformt und die Symmetrieachse der Halbkugelschale 40 fällt mit der Rotationsachse zusammen. Ansonsten entspricht die Ausführungsform gemäß der Figur 7 derjenigen gemäß der Figur 6.

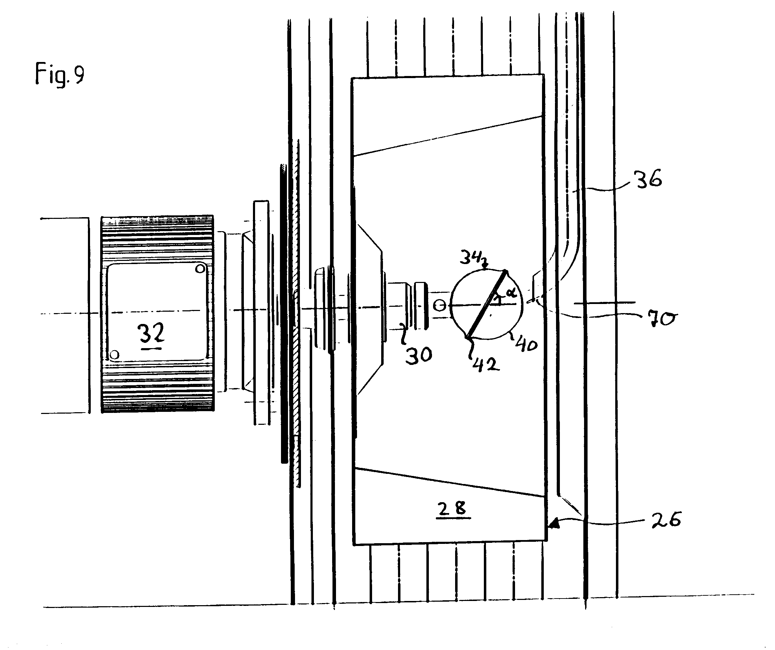

In den Figuren 9 bis 12 sind weitere Alternativen für erfindungsgemäße Ausführungsformen eines Konvektions- oder Dampfofens dargestellt. Wie auch bei den vorhergehenden Ausführungsformen gezeigt, umfaßt der Konvektions- und Dampfofen einen Ofenraum, in dem in bekannter Art und Weise auf Gleitschienen, Bleche oder Roste verschiebbar geführt sind. Über eine Trennwand ist ein Nebenraum vom Ofenraum abgeteilt. Dieser Nebenraum steht über umlaufende Schlitze und einen zentralen Durchbruch mit dem Ofenraum in Verbindung. Im Nebenraum ist ein radial wirkender Ventilator, der in den Fig. 9-12 mit 26 bezeichnet ist, angeordnet. Dieser weist auf einem Kreisumfang angeordnete Ventilatorblätter 28 auf. Der Ventilator 26 ist auf eine Ventilatornabe 30 geflanscht, die über einen Rotor 32 angetrieben wird. Ebenfalls auf der Ventilatorachse ist ein Vorzerstäubungselement 34 angeordnet, neben dem in Richtung der Rotationsachse die Austrittsöffnung einer Rohrleitung 36, in der zu verdampfendes Wasser eingefüllt wird, endet. Um den Ventilator 26 herum sind, wie in den Zeichnungen nicht näher dargestellt ist, Heizschlangen 38 gelegt, die beispielsweise gasbeheizt oder elektrisch beheizt sind. Der Ofen kann als Konvektionsofen betrieben werden, in dem mittels des radial wirkenden Ventilators 26 Luft über die Heizschlangen geführt wird, wo sie erhitzt wird. Die erhitzte Luft tritt durch den um die Wandung verlaufenden Spalt in den Ofenraum ein. Im Bereich des Durchbruchs wird die Luft vom Ventilator aus dem Ofenraum angesaugt und in Richtung der Ventilatorblätter 28 umgelenkt.

Bei der Betriebsweise als Dampfofen wird zusätzlich Wasser aus der Rohrleitung 36 auf das rotierende Vorzerstäubungselement 34 geleitet, wo es in feine Tröpfchen dispergiert wird, die sich über die Tiefe des Ventilators 26 verteilen. Diese vorzerstäubten Tröpfchen werden von der zu den Ventilatorblättern 28 umgelenkten Luftströmung mitgerissen und prallen gegen die Ventilatorblätter 28, wo sie zum zweitenmal dispergiert werden und damit fein zerstäubt werden. Die so fein zerstäubten Wasserpartikel werden an den hier nicht näher dargestellten Heizelementen vorbeigeführt und treten dort in die Dampfphase über. Der Dampf wird mittels des Luftstroms über dem Ofenraum gleich verteilt. Besonders vorteilhaft für die Dampfverteilung ist es in der hier gezeigten Ausführungsform, daß der Ofenraum über einem Überdruck von 3-8 mbar gehalten ist. Aus den Fig. 9-12 ergeben sich nun unterschiedliche Ausführungsformen für das Vorzerstäubungselement.

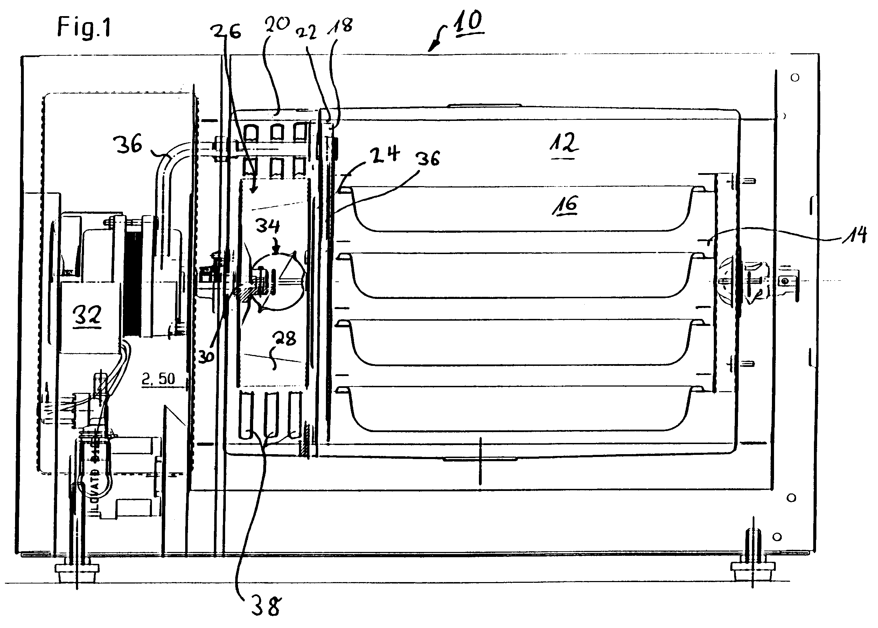

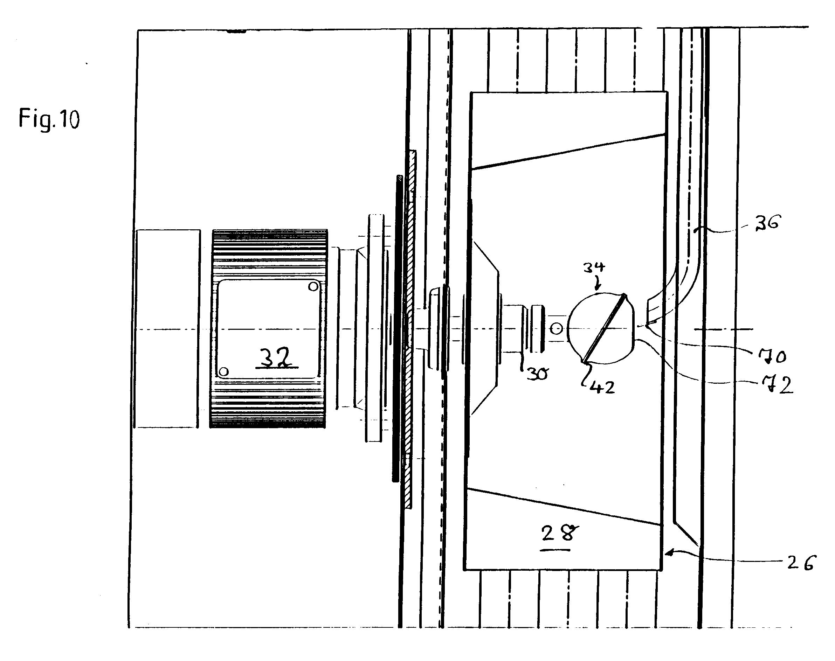

In Fig. 9 ist auf der durch den Motor 32 angetriebenen Ventilatorwelle 30 ein Vorzerstäubungselement 34 montiert, das aus zwei Halbkugelschalen 40 zusammengesetzt ist, wobei beide Halbkugelschalen von einem umlaufenden Rand 42 begrenzt werden. Die beiden Halbkugelschalen sind entlang der aufeinanderliegenden Ränder 42 miteinander stoffschlüssig verbunden. Entlang dieser stoffschlüssig miteinander verbundenen Ränder ist ein die Oberfläche der Kugel umhüllender Steg gebildet, der, wie der Fig. 10 zu entnehmen ist, die Rotationsachse der Kugel in einem Winkel α schneidet, der in diesem Ausführungsbeispiel ca. 60° beträgt. Somit wird hier ein Vorzerstäubungselement in Form einer Kugel gebildet, auf deren Oberfläche ein sie umhüllender Steg angeordnet ist. Die Austrittsöffnung der Rohrleitung 36 ist in Rotationsachsrichtung neben der Kugel angeordnet, wie der Fig. 1 zu entnehmen ist. An der zur Rotationsachse des Ventilators 26 gerichteten Seite der Austrittsöffnung der Rohrleitung ist ein Stab 70 angesetzt. Das freie Ende des Stabs 70 reicht ungefähr bis zur Rotationsachse des Ventilators 26. Über diesen Stab werden die aus der Austrittsöffnung der Rohrleitung 36 austretenden Wassertropfen in Richtung zum Vorzerstäubungselement 34 hin geführt. Im übrigen werden sie durch die axial einströmende Luft in Richtung zum Vorzerstäubungselement hin mitgerissen.

Die Ausführungsform gemäß Fig. 10 entspricht weitgehend derjenigen gemäß Fig. 1, so daß die einzelnen Merkmale hier nicht nochmals wiederholt werden. Im Unterschied zu der Ausführungsform gemäß Fig. 1 weist jedoch das Vorzerstäubungselement 34 eine Abflachung 72 auf, so daß sich im wesentlichen eine Kugel mit einseitiger Abflachung ergibt. Die Abflachung 72 ist der Austrittsöffnung der Rohrleitung 36 gegenüber angeordnet.

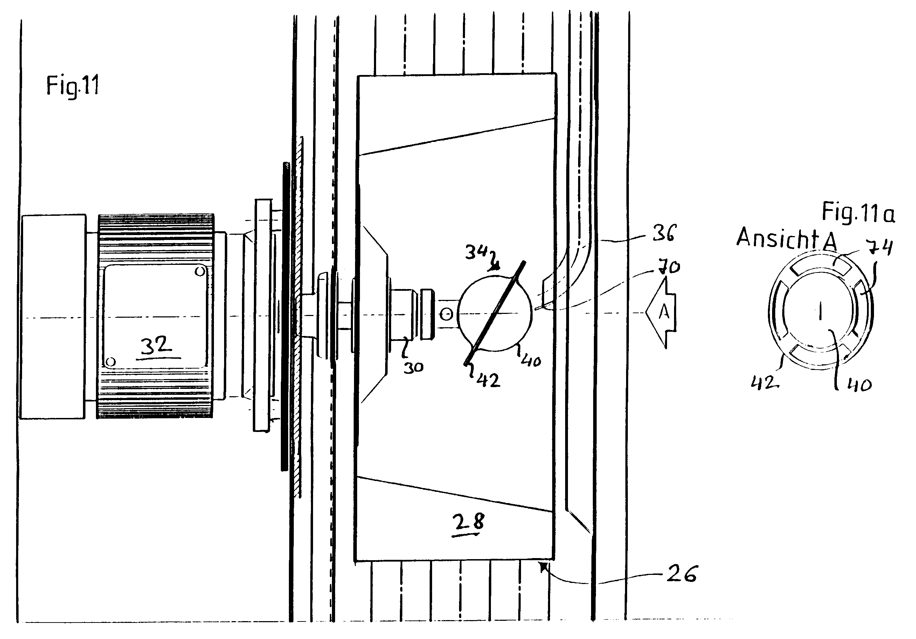

In den Fig. 11 und 11a ist eine weitere Modifikation des Vorzerstäubungselements dargestellt. Hier weist der die Kugel umhüllende Steg 42, der vergleichsweise breiter ausgeführt ist, entlang des den Steg bildenden Kreisrings Durchbrüche 74 auf. Diese führen zu einer weiteren Verbesserung der Zerstäubung.

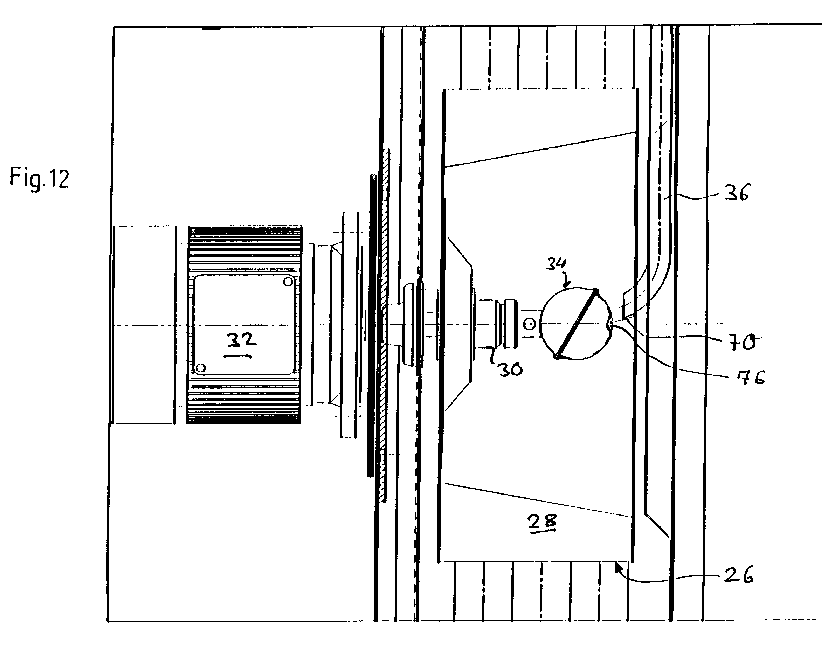

Schließlich zeigt die Fig. 12 eine andere Modifikation des Ausführungsbeispiels gemäß Fig. 9, die darin besteht, daß das kugelförmige Vorzerstäubungselement 34 eine in Rotationsachsrichtung ins Kugelinnere hin gerichtete Ausnehmung 76 aufweist und daß der Stab 70 bis in diese Ausnehmung hinein reicht.

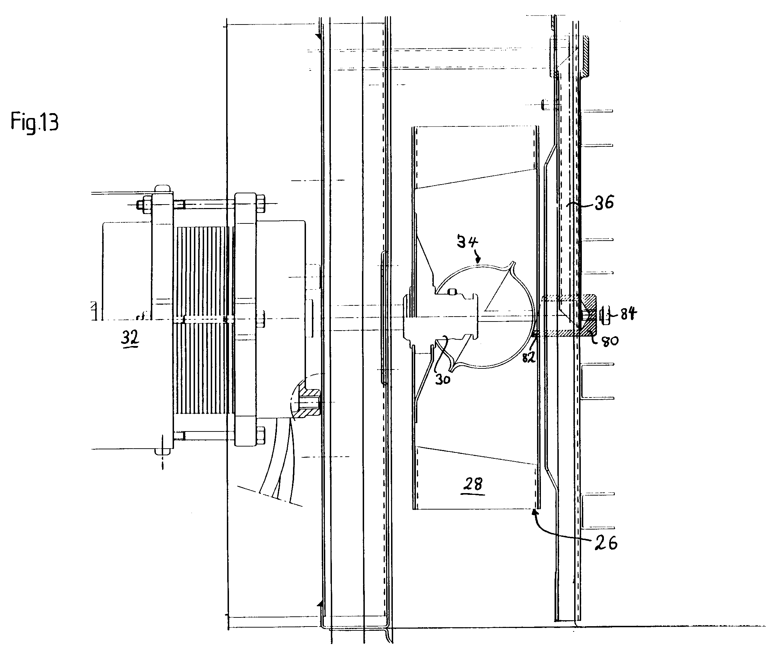

Gemäß dem Ausführungsbeispiel nach Fig. 13 ist das Vorzerstäubungselement 34 entsprechend der Ausführungsform gemäß Fig. 1 ausgebildet. In diesem Ausführungsbeispiel ist allerdings die Rohrleitung 36 modifiziert. Entsprechend der Darstellung gemäß Fig. 13 wird die Rohrleitung parallel zu den den Ofenraum bildenden Wandungen bis ungefähr in Höhe der Symmetrielinie des als Kugel ausgebildeten Vorzerstäubungselements 34 heruntergezogen. Die angeschrägte Spitze der Rohrleitung 36 mündet in einem Becher 80. Der Becher 80 hat einen angeschrägten Rand 82, der zum Vorzerstäubungselement 34 hin weist. Ein Teilbereich des Randes 82 kann, wie in Fig. 13 dargestellt, an der Oberfläche des Vorzerstäubungselements 34 anliegen. Der Becher aus Gummi 80 kann über eine Klemmschraube 84 mit der Rohrleitung 36 verbunden sein. Durch diese Anordnung wird gewährleistet, daß das durch die Rohrleitung 36 einströmende Wasser über den Hohlraum des Bechers mit dem Vorzerstäubungselement in Kontakt gebracht wird. Nach dem zwangsweisen Kontakt mit dem Vorzerstäubungselement 34 wird dieses von der Oberfläche des Vorzerstäubungselements 34 weggeschleudert und dadurch bereits zerstäubt.

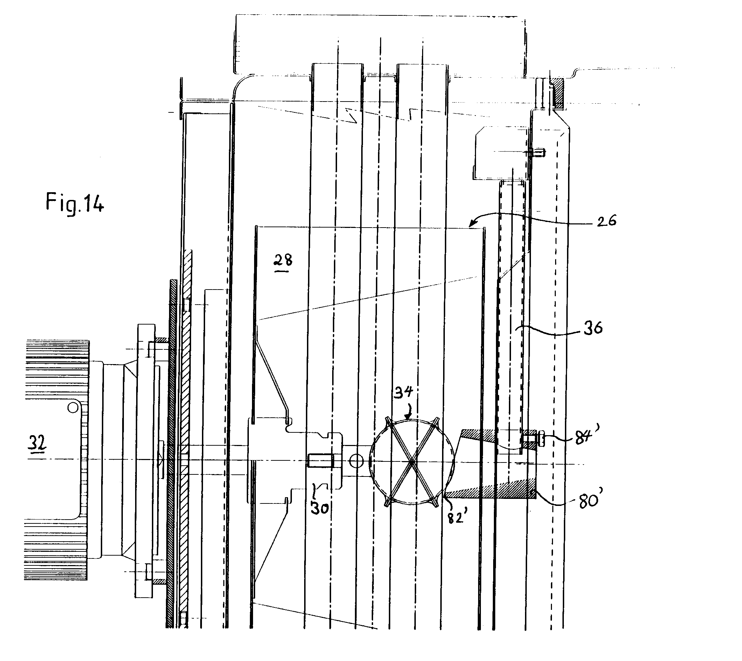

In Fig. 14 ist eine modifizierte Form eines Bechers, die eher als Rohrstück 80' beschrieben werden kann, dargestellt. Das Rohrstück 80' ist innen trichterförmig ausgebildet. Hierdurch wird gewährleistet, daß das Wasser entlang des sich zum Vorzerstäubungselement 34 hin erweiternden Trichters läuft. Dadurch wird das Wasser auf das Vorzerstäubungselement geleitet. Das Wasser wird dabei zusätzlich durch die durch die Rohrleitung 80' angesaugte Luft, die aufgrund der Ventilationswirkung des Ventilators 28 angesaugt wird, mitgeschleppt. Auch das Rohrstück wird über eine Klemmschraube 84' mit der Rohrleitung 36 verbunden. Das Rohrstück 80' besteht hier ebenfalls aus Gummi.

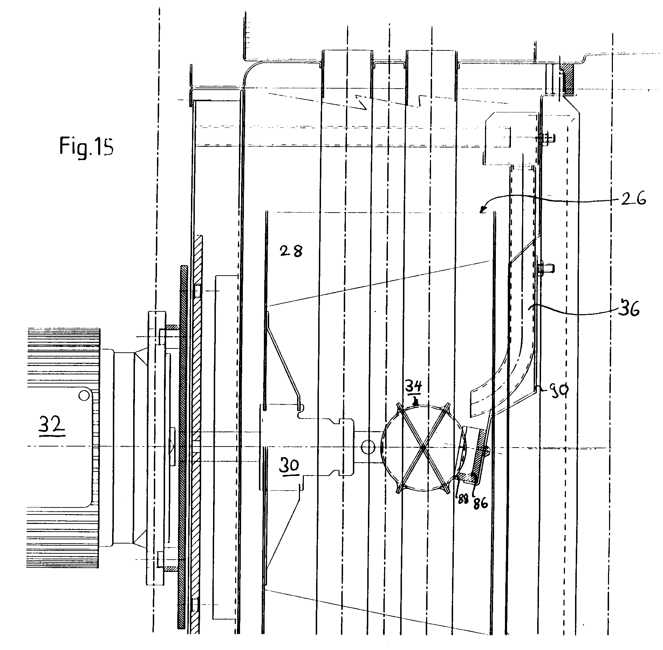

In Fig. 15 ist eine Ausführungsform dargestellt, bei der die Rohrleitung 36 auch den Verlauf, wie er in Fig. 1 dargestellt wurde, entspricht. Hier ist allerdings unterhalb der Austrittsöffnung der Rohrleitung 36 ein wannenförmiges Element 86 aus Gummi angeordnet, das mit einem Rand 88 an der Oberfläche des Vorzerstäubungselements 34 anliegt. Das wannenförmige Element 86 ist über ein Halteblech 90 an der Rohrleitung 36 angeschraubt. Das aus der Austrittsöffnung der Rohrleitung 36 austretende Wasser tropft auf das wannenförmige Element 86 und wird von diesem, wie in Fig. 15 dargestellt, zwangsweise mit dem Vorzerstäubungselement 34 in Kontakt gebracht.

## Patentansprüche

1. Konvektions- und Dampfofen (10) für Lebensmittel mit einem Ofenraum (12) und einem von diesem abgeteilten Nebenraum (20), in dem ein motorbetriebener, radial wirkender Ventilator (26) und mehrere diesen umgebende Heizelemente (38) angeordnet sind, wobei auf der Nabe (30) des Ventilators (26) ein mit diesem rotierendes Vorzerstäubungselement (34) für wahlweise aus einer Rohrleitung (36) auf dieses geführtes Wasser angeordnet ist, wobei
das Vorzerstäubungselement (34) als separater Körper auf der Nabe (30) des Ventilators (26) angeordnet ist, dadurch gekennzeichnet, daß das Vorzerstäubungselement (34) eine konvexe Oberfläche aufweist, auf welche das Wasser geführt wird.

2. Konvektions- und Dampfofen nach Anspruch 1, dadurch gekennzeichnet, daß der konvexe Körper eine Kugel ist.

3. Konvektions- und Dampfofen nach Anspruch 2, dadurch gekennzeichnet, daß auf der Oberfläche der Kugel ein die Kugel umhüllender Steg angeordnet ist, der die Rotationsachse der Kugel in einem Winkel (α) schneidet, der größer als 0° und kleiner als 90° ist.

4. Konvektions- und Dampfofen nach Anspruch 2 oder 3, dadurch gekennzeichnet, daß die Austrittsöffnung der Rohrleitung in Rotationsrichtung neben der Kugel angeordnet und axial auf die Kugel hingerichtet ist.

5. Konvektions- und Dampfofen nach einem der Ansprüche 1 bis 4, dadurch gekennzeichnet, daß die Kugel aus zwei Halbkugelschalen zusammengesetzt ist, wobei beide Halbkugelschalen von einem umlaufenden Rand begrenzt werden, und daß die beiden Halbkugelschalen entlang der aufeinanderliegenden Ränder miteinander stoffschlüssig und/oder formschlüssig verbunden sind.

6. Konvektions- und Dampfofen nach Anspruch 5, dadurch gekennzeichnet, daß die Halbkugelschalen zwei Durchbrüche aufweisen, wobei der eine Durchbruch an einen Wellenansatz der Ventilatornabe angepaßt ist und wobei durch den anderern Durchbruch eine Montageschraube zur Montage der Kugel geführt ist.

7. Konvektions- und Dampfofen nach einem der Ansprüche 2 bis 6, dadurch gekennzeichnet, daß die Oberfläche der Kugel teilweise abgeflacht ist.

8. Konvektions- und Dampfofen nach Anspruch 1, dadurch gekennzeichnet, daß das Vorzerstäubungselement aus einer Halbkugel besteht.

9. Konvektions- und Dampfofen nach Anspruch 8, dadurch gekennzeichnet, daß die Symmetrielinie der Halbkugel mit der Rotationsachse zusammenfällt.

10. Konvektions- und Dampfofen nach Anspruch 8, dadurch gekennzeichnet, daß die Symmetrielinie der Halbkugel unter einem Winkel (β) zu der Rotationsachse angestellt ist.

11. Konvektions- und Dampfofen nach einem der Ansprüche 8 bis 10, dadurch gekennzeichnet, daß die Halbkugel aus einer Halbkugelschale mit umlaufenden Rand und einer mit diesem umlaufenden Rand bündig abschließenden und stoffschlüssig mit diesem verbundenen kreisrunden Platte besteht.

12. Konvektions- und Dampfofen nach einem der vorangehenden Ansprüche, dadurch gekennzeichnet, daß an der zur Rotationsachse des Ventilators gerichteten Seite der Austrittsöffnung der Rohrleitung ein Stab, eine Zunge oder ein weiteres Rohr angesetzt ist.

13. Konvektions- und Dampfofen nach Anspruch 12, dadurch gekennzeichnet, daß der Stab, die Zunge oder das weitere Rohr elastisch ist und gegebenenfalls aus Gummi besteht.

14. Konvektions- und Dampfofen nach Anspruch 12, dadurch gekennzeichnet, daß der Stab, die Zunge oder das weitere Rohr aus Metall bestehen.

15. Konvektions- und Dampfofen nach einem der Ansprüche 12-14, dadurch gekennzeichnet, daß das freie Ende des Stabs ungefähr bis zur Rotationsachse des Ventilators reicht.

16. Konvektions- und Dampfofen nach einem der vorangehenden Ansprüche, dadurch gekennzeichnet, daß die Kugel einseitig abgeflacht ist, wobei die Abflachung der Austrittsöffnung der Rohrleitung gegenüberliegt.

17. Konvektions- und Dampfofen nach einem der Ansprüche 12-16, dadurch gekennzeichnet, daß die Kugel eine in Rotationsachsrichtung ins Kugelinnere hin gerichtete Ausnehmung aufweist, und daß der Stab bis in diese Ausnehmung hineinreicht.

18. Konvektions- und Dampfofen nach einem der vorangehenden Ansprüche, dadurch gekennzeichnet, daß am Ende der Rohrleitung, die ungefähr in der Höhe der Rotationsachse des Ventilators endet, ein zum Vorzerstäubungselement offener Becher angesetzt ist.

19. Konvektions- und Dampfofen nach Anspruch 18, dadurch gekennzeichnet, daß der Becher aus Gummi oder Kunststoff besteht.

20. Konvektions- und Dampfofen nach Anspruch 18 oder Anspruch 19, dadurch gekennzeichnet, daß der offene Rand des Bechers angeschrägt ist und daß ein Teil des Randes unmittelbar neben dem Vorzerstäubungselement angeordnet ist.

21. Konvektions- und Dampfofen nach einem der Ansprüche 18-20, dadurch gekennzeichnet, daß anstelle des Bechers ein an beiden Enden offenes Rohr an der Rohrleitung angesetzt ist.

22. Konvektions- und Dampfofen nach Anspruch 4 und eventuell nach einem der Ansprüche 5-18, dadurch gekennzeichnet, daß die Austrittsöffnung der Rohrleitung oberhalb der Kugel liegt und daß unterhalb der Austrittsöffnung im Bereich der Symmetrieachse des Vorzerstäubungselementes eine Auffangwanne angeordnet ist, deren unterer Rand neben dem Vorzerstäubungselement endet.

## Claims

1. Convection and steam oven (10) for foodstuffs, with an oven space (12) and a secondary space (20) which is divided off from the latter and in which are arranged a motor-operated radially acting fan (26) and a plurality of heating elements (38) surrounding the latter, there being arranged on the hub (30) of the fan (26) a pre-atomizing element (34), rotating with the latter, for water which is selectively guided out of a pipeline (36) onto the said pre-atomizing element, the latter (34) being arranged as a separate body on the hub (30) of the fan (26), characterized in that the pre-atomizing element (34) has a convex surface, onto which the water is guided.

2. Convection and steam oven according to Claim 1, characterized in that the convex body is a sphere.

3. Convection and steam oven according to Claim 2, characterized in that a web enveloping the sphere is arranged on the surface of the latter, the said web intersecting the axis of rotation of the sphere at an angle (α) which is larger than 0° and smaller than 90°.

4. Convection and steam oven according to Claim 2 or 3, characterized in that the outlet orifice of the pipeline is arranged next to the sphere in the direction of rotation and is directed axially onto the sphere.

5. Convection and steam oven according to one of Claims 1 to 4, characterized in that the sphere is composed of two hemispherical dishes, the two hemispherical dishes being delimited by a peripheral rim, and in that the two hemispherical dishes are integrally and/or positively connected to one another along the rims resting on one another.

6. Convection and steam oven according to Claim 5, characterized in that the hemispherical dishes have two perforations, one perforation being adapted to a shaft extension of the fan hub, and a mounting screw for mounting the sphere being led through the other perforation.

7. Convection and steam oven according to one of Claims 2 to 6, characterized in that the surface of the sphere is partially flattened.

8. Convection and steam oven according to Claim 1, characterized in that the pre-atomizing element consists of a hemisphere.

9. Convection and steam oven according to Claim 8, characterized in that the bisecting line of the hemisphere coincides with the axis of rotation.

10. Convection and steam oven according to Claim 8, characterized in that the bisecting line of the hemisphere is set at an angle (β) to the axis of rotation.

11. Convection and steam oven according to one of Claims 8 to 10, characterized in that the hemisphere consists of a hemispherical dish with a peripheral rim and of a circular plate terminating flush with this peripheral rim and integrally connected to the latter.

12. Convection and steam oven according to one of the preceding claims, characterized in that a bar, a tongue or a further pipe is attached to that side of the outlet orifice of the pipeline which is directed towards the axis of rotation of the fan.

13. Convection and steam oven according to Claim 12, characterized in that the bar, the tongue or the further pipe is elastic and, if appropriate, consists of rubber.

14. Convection and steam oven according to Claim 12, characterized in that the bar, the tongue or the further pipe consists of metal.

15. Convection and steam oven according to one of Claims 12 to 14, characterized in that the free end of the bar reaches approximately as far as the axis of rotation of the fan.

16. Convection and steam oven according to one of the preceding claims, characterized in that the sphere is flattened on one side, the flattening being located opposite the outlet orifice of the pipeline.

17. Convection and steam oven according to one of Claims 12 to 16, characterized in that the sphere has a recess directed into the sphere interior in the direction of the axis of rotation, and in that the bar reaches into this recess.

18. Convection and steam oven according to one of the preceding claims, characterized in that a bowl open to the pre-atomizing element is attached to the end of the pipeline which terminates approximately level with the axis of rotation of the fan.

19. Convection and steam oven according to Claim 18, characterized in that the bowl consists of rubber or plastic.

20. Convection and steam oven according to Claim 18 or Claim 19, characterized in that the open rim of the bowl is bevelled, and in that part of the rim is arranged directly next to the pre-atomizing element.

21. Convection and steam oven according to one of Claims 18 to 20, characterized in that a pipe open at both ends, instead of the bowl, is attached to the pipeline.

22. Convection and steam oven according to Claim 4 and, where appropriate, according to one of Claims 5 to 18, characterized in that the outlet orifice of the pipeline is located above the sphere, and in that there is arranged below the outlet orifice, in the region of the axis of symmetry of the pre-atomizing element, a collecting trough, the lower rim of which terminates next to the pre-atomizing element.

## Revendications

1. Four à convection et à vapeur (10), pour des produits alimentaires, comportant une enceinte de four (12) et une enceinte annexe (20) séparée de celle-ci, dans laquelle sont disposés un ventilateur (26) à effet radial, entraîné par un moteur, et plusieurs éléments chauffants (38) entourant celui-ci, sur le moyeu (30) du ventilateur (26) étant disposé un élément de prépulvérisation (34) tournant avec celui-ci, destiné au choix à de l'eau, issue d'une tuyauterie (36) et guidée sur cet élément,
l'élément de prépulvérisation (34) étant disposé à titre de corps séparé sur le moyeu (30) du ventilateur (26) caractérisé en ce que l'élément prépulvérisation (34) présente une surface convexe sur laquelle l'eau est guidée.

2. Four à convection et à vapeur selon la revendication 1, caractérisé en ce que le corps convexe est une sphère.

3. Four à convection et à vapeur selon la revendication 2, caractérisé en ce que sur la surface de la sphère est disposée une nervure enveloppant la sphère et coupant l'axe de rotation de la sphère sous un angle (α) supérieur à 0° et inférieur à 90°.

4. Four à convection et à vapeur selon la revendication 2 ou 3, caractérisé en ce que l'ouverture de sortie de la tuyauterie est disposée, dans le sens de rotation, à côté de la sphère et orienté axialement sur la sphère.

5. Four à convection et à vapeur selon l'une des revendications 1 à 4, caractérisé en ce que la sphère est constituée de deux coques hémisphériques, les deux coques hémisphériques étant limitées par une bordure de pourtour, et en ce que les deux coques hémisphériques sont reliées ensemble, avec liaison par la matière et/ou avec ajustement de forme, le long des bords placés l'un contre l'autre.

6. Four à convection et à vapeur selon la revendication 5, caractérisé en ce que les coques hémisphériques présentent deux traversées, une traversée étant adaptée à l'appendice d'arbre du moyeu de ventilateur, et une vis de montage, destinée à assurer le montage de la sphère, étant guidée à travers l'autre traversée.

7. Four à convection et à vapeur selon l'une des revendications 2 à 6, caractérisé en ce que la surface de la sphère est partiellement aplatie.

8. Four à convection et à vapeur selon la revendication 1, caractérisé en ce que l'élément de prépulvérisation est constitué d'une demi-sphère.

9. Four à convection et à vapeur selon la revendication 8, caractérisé en ce que l'axe de symétrie de la demi sphère coïncide avec l'axe de rotation.

10. Four à convection et à vapeur selon la revendication 8, caractérisé en ce que l'axe de symétrie de la demi sphère est orienté sous l'angle (β) par rapport à l'axe de rotation.

11. Four à convection et à vapeur selon l'une des revendications 8 à 10, caractérisé en ce que la demi sphère est constituée d'une coque hémisphérique avec une bordure de pourtour et d'une plaque ronde circulaire, limitée de façon affleurée avec cette bordure de pourtour et reliée à celle-ci par une liaison par la matière.

12. Four à convection et à vapeur selon l'une des revendications précédentes, caractérisé en ce que sur le côté, tourné vers l'axe de rotation du ventilateur, de l'ouverture de sortie de la tuyauterie est placée une barre, une languette, ou un autre tube.

13. Four à convection et à vapeur selon la revendication 12, caractérisé en ce que la barre, la languette, ou l'autre tube est élastique et est, le cas échéant, réalisé en caoutchouc.

14. Four à convection et à vapeur selon la revendication 12, caractérisé en ce que l'abord la languette ou l'autre tube est constitué en métal.

15. Four à convection et à vapeur selon l'une des revendications 12-14, caractérisé en ce que l'extrémité libre de la barre arrive à peu près jusqu'à l'axe de rotation du ventilateur.

16. Four à convection et à vapeur selon l'une des revendications précédentes, caractérisé en ce que la sphère est aplatie sur un côté, l'aplatissement étant placé en regard de l'ouverture de sortie de la tuyauterie.

17. Four à convection et à vapeur selon l'une des revendications 12-16, caractérisé en ce que la sphère présente un évidement tourné vers l'intérieur de la sphère dans la direction de l'axe de rotation, et en ce que la barre arrive jusqu'à l'intérieur de cet évidement.

18. Four à convection et à vapeur selon l'une des revendications précédentes, caractérisé en ce que, à l'extrémité de la tuyauterie, qui s'achève à peu près au niveau de l'axe de rotation du ventilateur, est placé un godet, ouvert en direction de l'élément de prépulvérisation.

19. Four à convection et à vapeur selon la revendication 18, caractérisé en ce que le godet est réalisé en caoutchouc ou en matière synthétique.

20. Four à convection et à vapeur selon la revendication 18 ou la revendication 19, caractérisé en ce que le bord ouvert du godet est chanfreiné, et en ce qu'une partie du bord est disposée directement à côté de l'élément de prépulvérisation.

21. Four à convection et à vapeur selon l'une des revendications 18-20, caractérisé en ce que, au lieu du godet, est placé sur la tuyauterie un tube ouvert aux deux extrémités.

22. Four à convection et à vapeur selon la revendication 4 et éventuellement selon l'une des revendications 5-18, caractérisé en ce que l'ouverture de sortie de la tuyauterie est placée au-dessus de la sphère et en ce que, en dessous de l'ouverture de sortie, dans la zone de l'axe de symétrie de l'élément de prépulvérisation, est disposée une paroi de captage dont le bord inférieur s'achève à côté de l'élément de prépulvérisation.
